(19) Europäisches Patentamt
European Patent Office
Office européen des brevets

(11) **EP 3 709 056 B1**

(12) **EUROPÄISCHE PATENTSCHRIFT**

(45) Veröffentlichungstag und Bekanntmachung des Hinweises auf die Patenterteilung:
**13.11.2024   Patentblatt 2024/46**

(21) Anmeldenummer: **20159100.5**

(22) Anmeldetag: **24.02.2020**

(51) Internationale Patentklassifikation (IPC):
**G01S 13/00** (2006.01)      **G01S 13/87** (2006.01)
**G01S 13/935** (2020.01)     **G01S 7/02** (2006.01)
**G01S 7/35** (2006.01)       G01S 13/88 (2006.01)
**G01S 13/93** (2020.01)

(52) Gemeinsame Patentklassifikation (CPC):
**G01S 13/878; G01S 7/023; G01S 7/354;
G01S 13/00; G01S 13/003; G01S 13/87;
G01S 13/93; G01S 13/935;** G01S 7/358;
Y02E 10/72

(54) **COMPUTER IMPLEMENTIERTES VERFAHREN UND PASSIVES RADARDETEKTIONSSYSTEM ZUM DETEKTIEREN EINES FLUGOBJEKTS IM BEREICH EINER WINDKRAFTANLAGE**

COMPUTER IMPLEMENTED METHOD AND PASSIVE RADAR DETECTION SYSTEM FOR DETECTING A FLYING OBJECT IN THE AREA OF A WIND TURBINE

PROCÉDÉ MIS EN UVRE PAR ORDINATEUR ET SYSTÈME DE DÉTECTION RADAR PASSIF PERMETTANT DE DÉTECTER UN OBJET VOLANT DANS LA ZONE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2019   DE 102019106293**

(43) Veröffentlichungstag der Anmeldung:
**16.09.2020   Patentblatt 2020/38**

(73) Patentinhaber: **Fraunhofer-Gesellschaft zur Förderung
der angewandten Forschung e.V.
80686 München (DE)**

(72) Erfinder: **HECKENBACH, Jörg
53343 Wachtberg (DE)**

(74) Vertreter: **2SPL Patentanwälte PartG mbB
Landaubogen 3
81373 München (DE)**

(56) Entgegenhaltungen:
**DE-A1- 102013 004 463      US-A1- 2012 105 272**

- **KUSCHEL HEINER ET AL: "Passive radar collision warning system PARASOL", IEEE AEROSPACE AND ELECTRONIC SYSTEMS MAGAZINE, IEEE SERVICE CENTER, PISCATAWAY, NJ, US, vol. 32, no. 2, 1 February 2017 (2017-02-01), pages 40 - 52, XP011647967, ISSN: 0885-8985, [retrieved on 20170502], DOI: 10.1109/MAES.2017.150267**
- **MA YAHUI ET AL: "A Multi-Channel Partial-Update Algorithm for Sea Clutter Suppression in Passive Bistatic Radar", 2018 IEEE 10TH SENSOR ARRAY AND MULTICHANNEL SIGNAL PROCESSING WORKSHOP (SAM), IEEE, 8 July 2018 (2018-07-08), pages 252 - 256, XP033394786, DOI: 10.1109/SAM.2018.8448925**

EP 3 709 056 B1

## Beschreibung

## Technisches Gebiet

Ausführungsbeispiele befassen sich mit einem computer implementierten Verfahren zum Detektieren eines Flugobjekts in einem Bereich zumindest einer sich in Betrieb befindlichen Windkraftanlage. Weitere Beispiele betreffen ein entsprechendes Computerprogramm sowie passives Radardetektionssystem zum Detektieren eines Flugobjekts.

## Hintergrund

Es sind Verfahren zur Nutzung von Radarsystemen bekannt, die im Bereich von Windenergieanlagen, beispielsweise Windparks, eine Überwachung des Luftraums ermöglichen. Wenn ein Radar zur Beobachtung eines Gebietes mit Windenergieanlagen eingesetzt wird, kann das Radar durch die Signalechos der rotierenden Anlagenteile (rotierende Windrotorblätter) gestört werden, insbesondere durch sogenannte Rotorblattblitze. Rotorblattblitze treten dann auf, wenn das Rotorblatt bezüglich des Radarsensors in einer Position ist, in der die Oberfläche des Rotorblattes ein Signal maximaler Signalstärke zum Radarsensor reflektiert. Solche Störungen können zu entdeckende Ziele, etwa Flugobjekte wie Flugzeuge oder Drohnen, überlagern und so deren Entdeckung erschweren oder unmöglich machen. Zusätzlich können die Signalechos der Rotorblätter als falsche Ziele interpretiert werden und Prozessierungsblöcke im Radar mit Information überfluten, so dass für die tatsächlichen Ziele keine Prozessierungszeit mehr bleibt.

Aus der Druckschrift DE 10 2013 004 463 B4 ist ein passives Radar-System zum Umgang mit rotierenden Anlagenteilen bekannt. Die Druckschrift beschreibt eine Vorrichtung sowie ein Verfahren zur Detektion von Flugobjekten in einem Gebiet, in dem Windkraftanlagen betrieben werden. Die Vorrichtung umfasst mindestens einen Radarsensor zur Überwachung des Gebietes und eine Auswerteeinheit, mit der von dem Radarsensor erfasste Signale zur Detektion der Flugobjekte auswertbar sind. Die Auswerteeinheit ist so ausgebildet, dass Signalanteile sich bewegender Rotorblätter bei der Signalauswertung erkannt und die Auswertung der Signale für die Erfassung der Flugobjekte nur in Zeitfenstern durchgeführt wird, die keinen Signalanteil eines sich bewegenden Rotorblattes enthalten.

Das passive Radar nutzt die elektromagnetischen Ausstrahlungen von digitalen Radio- und Fernsehsendern (OFDM) zur Radarerfassung von bewegten Objekten ohne eigene Signale abzustrahlen. Dabei wird über die Messung der Laufzeitdifferenz zwischen dem direkt vom bekannten Sender empfangenen Signal und dem am Objekt reflektierten Signalecho ein Laufzeitellipsoid aufgespannt. Bei Nutzung mehrerer Sender oder mehrerer vernetzter Empfänger kann durch Bildung der Schnittpunkte von mindestens drei Ellipsoiden eine Ortung des Objekts erreicht werden.

Das passive Radar-System ist zur Identifizierung und Verarbeitung von Signalechos rotierender Anlagenteile der Windenergieanlagen (Windrotorblätter) ausgebildet. Das entsprechende Verfahren beruht darauf, dass die Zeitabschnitte mit relevanten Signalechos von Windrotorblättern (z.B. Rotorblattblitze) bei der Verarbeitung übersprungen werden.

Bei solchen Verfahren können sich mehrere Nachteile ergeben. Erstens kann der Rechenaufwand zur robusten Identifizierung hoch sein und daher teure, performante Computersysteme erfordern. Zweitens kann die Identifizierung etwa nur dann erfolgreich sein, wenn sich nur eine Windenergieanlage in einem Identifizierungsbereich (Entfernungsbereich) befindet. Dieser Nachteil könnte zwar bei geringer Anzahl von Windenergieanlagen in einem Windpark durch eine geschickte Verteilung der Sensoren minimiert werden, was aber zur Einschränkungen in der Standortwahl der Sensoren führt. Bei einer großen Anzahl von Windenergieanlagen ist die Bedingung z.B. nicht vollständig erfüllbar.

Insbesondere kann beim Überspringen von Zeitabschnitten elektromagnetische Energie von Echosignalen der Luftfahrtzeuge verloren gehen, die z.B. zur lückenlosen Erkennung erforderlich ist. Die Echoenergie eines Luftfahrtzeuges kann sich bedingt durch dessen Bewegung während eines Betrachtungszeitintervalls auf mehrere Entfernungsbereiche verteilen. Eine kohärente Integration dieser Energie ist z.B. dann nicht möglich, wenn diese Entfernungsbereiche durch verschiedene Windenergieanlagen belegt sind, die zu unterschiedlichen Zeitpunkten eine Erkennungslücke verlangen.

Abhängig von den Standorten der einzelnen Sensoren in einem Netzwerk können sich unterschiedliche zeitliche Lagen der Erkennungslücken ergeben. Zur Bildung der Schnittpunkte der Laufzeitellipsoide ist daher beispielsweise eine Prädiktion auf einen gemeinsamen Zeitpunkt erforderlich. Beispielsweise erfordern in bekannten Detektionsverfahren einige Verfahrensschritte tolerante Parameter oder breite Parameterbereiche, was zu schlechteren Ergebnissen bei der Ortung der Luftfahrtzeuge, sowie zu zusätzlichen falschen Erkennungen führen kann. Schließlich kann eine zur Verbesserung der Ortung, insbesondere der Höhenschätzung, angedachte interferometrische Auswertung die Kalibration der Empfangskanäle und die genaue Kenntnis über Phasen- und Amplitudengang der Antennendiagramme erfordern. Die Höhenschätzung ist z.B. nur dann möglich, nachdem aus den Ellipsoidschnitten der Ort bestimmt wurde und damit die Einfallswinkel auf die Antennen bekannt sind. Dann können aus dem Antennendiagramm die für die Bestimmung der Interferometerphase erforderlichen Werte abgelesen werden. Dieses Verfahren ist beispielsweise sehr rechenintensiv und aufwändig.

Eine Aufgabe ist es, Flugobjekte im Bereich von Windenergieanlagen mittels Radarortung besser detektieren zu können.

**Zusammenfassung**

Die Aufgabe wird gelöst gemäß dem Gegenstand der unabhängigen Patentansprüche. Beispiele vorteilhafter Weiterbildungen sind in Verbindung mit den abhängigen Patentansprüchen, der folgenden Beschreibung sowie den Figuren beschrieben.

Ein Beispiel befasst sich mit einem computer implementierten Verfahren zum Detektieren eines Flugobjekts in einem Bereich zumindest einer sich in Betrieb befindlichen Windkraftanlage. Im Allgemeinen kann das Verfahren zum Detektieren von sich translatorisch bewegenden Objekten in Umgebungen mit rotatorisch bewegten Objekten (z.B. zumindest zeitlich relativ konstant rotierende Elemente) genutzt werden. Das Verfahren wird basierend auf zumindest zwei komplexwertigen Echokarten (z.B. Range-Doppler-Karten) eines passiven Radarsystems mit zumindest einem Eingangskanal oder Empfangskanal pro Echokarte durchgeführt. Mit anderen Worten wird ein passives Radarsystem mit zumindest zwei Eingangs- oder Empfangskanälen umfassend eine jeweilige Empfangsantenne oder Radarantenne verwendet.

Dadurch kann jeweils eine zu einem Eingangskanal korrespondierende Echokarte bereitgestellt werden.

Das Verfahren umfasst ein Kombinieren der zumindest zwei komplexwertigen Echokarten mit einem komplexwertigen Koeffizientensatz, um eine modifizierte Echokarte zu erzeugen, die dem Koeffizientensatz zugeordnet ist. Die modifizierte Echokarte wird als Strahl-Echokarte bezeichnet.

Ferner umfasst das Verfahren ein Erstellen einer Stör-Echokarte für die modifizierte Echokarte (z.B. korrespondierend zu der modifizierten Echokarte). Die erstellte Stör-Echokarte kann zum Kombinieren der modifizierten Echokarte und ihrer korrespondierenden Stör-Echokarte verwendet werden, um eine kompensierte Echokarte zu erhalten. In der kompensierten Echokarte sind quasi-stationäre Signalanteile der modifizierten Echokarte reduziert.

Die Signalanteile in den komplexwertigen Echokarten, welche von den rotierenden Teilen (Rotorblätter) der Windkraftanlagen hervorgerufen werden und die Signalanteile, welche von dem zu detektierenden Flugobjekt hervorgerufen werden, unterscheiden sich charakteristisch. Die Rotorblätter bewegen sich innerhalb eines gleich bleibenden Bereichs und rufen dadurch in gleichmäßigen Zeitabständen wiederkehrende oder quasi-stationäre Echos mit stets wiederkehrenden Phasenwerten hervor. Mit anderen Worten rotieren Rotorblätter von Windkraftanlagen zumindest relativ konstant, sodass von den Rotorblättern hervorgerufene Rotorblattblitze kontinuierlich mit einem konstanten Phasenwert in den Signalanteilen vorhanden sind. Ein Flugobjekt bewegt sich dagegen durch verschiedene Erfassungsbereiche hindurch kontinuierlich fort und ruft Signalanteile mit sich kontinuierlich verändernder Phase hervor. Verfahrensgemäß kann dieser Unterschied verwendet werden, um die unterschiedlichen Signalanteile zu unterscheiden und die Echoanteile der Rotorblätter zu unterdrücken.

Durch den quasi-stationären Charakter der Rotorblattblitze ist es möglich, diese von einem Echosignal eines Flugobjekts zu unterscheiden. Die Stör-Echokarte kann die Signalanteile der Windrotorblätter umfassen, während vom Flugobjekt hervorgerufene Signalanteile in der Stör-Echokarte unterdrückt sind. Durch Kombinieren der modifizierten Echokarte und der Stör-Echokarte können wiederum die Signalanteile der Windrotorblätter in der modifizierten Echokarte reduziert oder unterdrückt werden. Somit bleiben idealerweise z.B. nur Signalanteile, die von einem oder mehreren Flugobjekten hervorgerufen sind, in der kompensierten Echokarte zurück.

Das Verfahren umfasst ein Identifizieren möglicher Flugobjekte in der kompensierten Echokarte. Beispielsweise kann ein Schwellenwert verwendet werden und Amplitudenwerte von Zellen der kompensierten Echokarte mit dem Schwellenwert verglichen werden. Zum Beispiel kann an Positionen, die zu Zellen korrespondieren, in denen der Amplitudenwert größer als der Schwellenwert ist, das Vorhandensein eines Flugobjektes angenommen werden. Durch die zuvor beschriebene Unterdrückung der durch die Windrotorblätter hervorgerufenen Störsignalanteile in der kompensierten Echokarte kann ein verbessertes, z.B. zuverlässigeres Identifizieren von Flugobjekten ermöglicht werden. Beispielsweise können nur noch Echoanteile des Flugobjekts in der kompensierten Echokarte vorhanden sein oder eine Anzahl von aufgrund der Störsignale der Windkraftanlagen fälschlich ermittelten Positionen stark reduziert werden. Dabei kann beispielsweise im Gegensatz zu Verfahren, in denen Signalabschnitte mit Störanteilen ausgeschnitten werden, mehr Signalenergie des Echos des Flugobjektes genutzt werden, um dieses zu detektieren, da kein Signalabschnitt ausgeschnitten wird, welcher Echoanteile des Flugobjekts aufweist. Für den Fachmann ist es einfach zu erkennen, dass das beschriebene Verfahren neben dem beschriebenen Anwendungsfall vorteilhafterweise in anderen Bereichen, in denen translatorisch bewegte Objekte in einer Umgebung mit rotatorisch bewegten Objekten detektiert werden sollen, angewendet werden kann.

Im Weiteren werden weitere Beispiele und vorteilhafte Ausführungsformen beschrieben. Beispielsweise umfasst das Kombinieren der zumindest zwei komplexwertigen Echokarten ein Erzeugen eines Differenzsignals der Echokarten der zwei Eingangskanäle. Es ist möglich, zumindest eine der beiden Echokarten mit dem komplexwertigen Koeffizientensatz zu multiplizieren und von der anderen Echokarte zu subtrahieren. Beispielsweise können beide komplexwertigen Echokarten vor dem Erzeugen des Differenzsignals mit einem komplexwertigen Koeffizientensatz multipliziert werden. Beispielsweise sind Empfangsantennen der zumindest zwei Eingangskanäle in unterschiedlichen Abständen zur Windkraftanlage angeordnet, sodass sich in den korrespondierenden Echokarten Laufzeit- und Phasenunterschiede ergeben. Die quasi-stationären Signale der Rotorblätter führen im Gegensatz zu Signalen des Flugobjekts zu konstanten Werten im Differenzsignal.

Der komplexwertige Koeffizientensatz kann einen bestimmten Phasenwert umfassen. Wie bereits beschrieben, weisen die Signalanteile der Rotorblätter und des Flugobjekts im Allgemeinen verschiedenartige Phasenwerte auf. Durch die Kombination des komplexwertigen Koeffizientensatzes, beispielsweise mittels einer Multiplikation eines Wertes der komplexwertigen Echokarte und des Phasenwertes, ergeben sich daher je nach Phasenwert und Signalanteil in der Echokarte konstruktive oder destruktive Überlagerungen. Der Phasenwert kann an die geometrischen Abstände zwischen einer Empfangsantenne eines Eingangskanals und einem Rotorblatt sowie eine Wellenlänge eines verwendeten Funksignals angepasst sein. Beispielsweise kann der Phasenwert zu einer destruktiven Überlagerung mit Echoanteilen der Rotorblätter (Störsignalanteile) führen.

Das Kombinieren kann mittels eines Strahlformers, wie er aus der Radartechnik bekannt ist, erfolgen. Das Kombinieren von Echokarte und komplexwertigem Koeffizientensatz wird durch elementweises Multiplizieren zumindest einer Echokarte mit dem komplexwertigen Koeffizientensatz durchgeführt. Der komplexwertige Koeffizientensatz kann, wie bereits erwähnt, beispielsweise basierend auf einer geometrischen Anordnung von Windkraftanlage und Radardetektor, derart gewählt sein, um die Signalanteile der Windkraftanlagen (z.B. Rotorblattechos) möglichst stark zu unterdrücken.

Insbesondere ist ein Verwenden zumindest zweier verschiedener komplexwertiger Koeffizientensätze oder einer Mehrzahl komplexwertiger Koeffizientensätze möglich, um zumindest zweimal eine jeweils auf einem der Koeffizientensätze basierende modifizierte Echokarte zu erzeugen. Die Phasenwerte der komplexwertigen Koeffizientensätze können äquidistant auf dem Einheitskreis oder symmetrisch auf dem Einheitskreis verteilt sein. Beispielsweise kann eine Mehrzahl an Phasenwerten des komplexwertigen Koeffizientensatzes zum Erzeugen einer Mehrzahl an modifizierten Echokarten, die dem Koeffizientensatz zugeordnet sind, genutzt werden. Das Multiplizieren der Echokarte mit dem komplexwertigen Koeffizientensatz mit verschiedenen Phasenwerten kann ein Aufteilen der Signalanteile der Windkraftanlage auf die Mehrzahl von modifizierten Echokarten bewirken. Dadurch kann sich ein Signalverhältnis des Signalanteils des Flugobjekts zu dem Signalanteil der Windkraftanlage verbessern, sodass beispielsweise ein Überdecken des Echosignals des Flugobjekts durch ein Störsignal vermieden werden kann.

Der Koeffizientensatz ist an eine geometrische Anordnung der Windkraftanlage und des Radarsystems angepasst. Auf Grundlage der Position des Radarsystems zur Windkraftanlage kann ein Koeffizientensatz berechnet werden oder eine Mehrzahl an Koeffizientensätzen berechnet werden. Durch die Mehrzahl von Koeffizientensätzen können auf Basis der zumindest zwei komplexwertigen Echokarten mehrere modifizierte Echokarten und korrespondierende Stör-Echokarten erzeugt werden und somit eine entsprechende Mehrzahl an kompensierten Echokarten. Beispielsweise kann dadurch eine jeweilige Positionierung von Empfangsantennen der zumindest zwei Eingangskanäle zu einer Mehrzahl an Windkraftanlagen berücksichtigt werden.

Es ist möglich, dass das Verfahren ein Anpassen des komplexwertigen Koeffizientensatzes basierend auf einer aktuellen Detektionssituation umfasst. Beispielsweise kann sich beim Detektieren des Flugobjektes ergeben, dass ein Koeffizientensatz mit einem bestimmten Phasenwert besonders geeignet ist, um Störsignale zu unterdrücken. In diesem Fall kann Beispielsweise von einer symmetrischen Verteilung der Phasenwerte im Einheitskreis abgewichen werden und Phasenwerte im Bereich des ermittelten geeigneten Phasenwertes konzentriert werden.

Beispielsweise kann ein adaptives Anpassen dann erfolgen, wenn eine modifizierte Echokarte besonders gute Detektionen liefert. In diesem Fall können um den Bereich des betreffenden korrespondierenden Koeffizientensatzes herum in dichterem Abstand neue Koeffizientensätze gebildet werden. Koeffizientensätze von Echokarten mit schlechterer Detektion können z.B. ausgedünnt werden. Das adaptive Anpassen der Koeffizientensätze kann beispielsweise durch einen rückgekoppelten, iterativen Prozess erfolgen. Mit anderen Worten kann es sein, dass nicht eine statisch vorgegebene Auswahl von Koeffizienten verwendet wird, sondern die Koeffizienten durch eine Kopplung von nachfolgenden oder vorangehenden Verfahrensschritten angepasst werden. Beispielsweise kann eine solche Kopplung auch mit anderen als den dargestellten Verfahrensschritten erfolgen.

Verfahrensgemäß umfasst das Erstellen der Stör-Echokarten ein Verwenden eines Tiefpassfilters. Dabei kann ausgenutzt werden, dass die Signalanteile der Windkrafträder quasistationär wiederkehrend sind (niederfrequent) während die Signalanteile des Flugobjektes kontinuierlich verändert sind (höherfrequent). Durch das Tiefpassfilter der modifizierten Echokarte können in der Stör-Echokarte die Signalanteile der Windkrafträder, also die Störsignale erhalten bleiben, während das Signal des Flugobjekts (das Nutzsignal) herausgefiltert wird.

Beispielsweise ist das Tiefpassfilter ein adaptives Tiefpassfilter. Das Tiefpassfilter kann ein Exponentialfilter sein. Dadurch ist es möglich, langsame Veränderungen des Signalanteils der Rotorblätter zu berücksichtigen, beispielsweise wenn sich eine Drehfrequenz der Rotorblätter ändert und/oder eine Rotorblattstellung der Rotorblätter ändert.

Verfahrensgemäß kann das Kombinieren der modifizierten Echokarte und ihrer korrespondierenden Stör-Echokarte ein Dividieren der Werte der modifizierten Echokarte durch die Werte ihrer korrespondierenden Stör-Echokarte umfassen. Die Stör-Echokarte umfasst in Zellen ohne Störsignale geringe Amplitudenwerte, sodass durch die Division eine Erhöhung der Werte der korrespondierenden Zellen der modifizierten Echokarte auftritt. Dadurch kann ein Verhältnis der Signalstärke zwischen Nutzsignal und Störsignal in der kompensierten Echokarte erhöht werden. Das Dividieren kann durch das Subtrahieren logarithmierter Werte erfolgen, etwa ohne die Werte der Echokarten rechenaufwendigen Logarithmieren zu unterwerfen. Alternativ ist es möglich, ein einfaches Subtrahieren der Stör-Echokarte von der Strahl-Echokarte durchzuführen. Jedoch kann ein Dividieren zu besserer Störunterdrückung führen.

Verfahrensgemäß kann das Identifizieren möglicher Flugobjekte ferner ein Zusammenfassen ermittelter Elemente mit einem Amplitudenwert größer einem Schwellenwert aus einer Mehrzahl an kompensierten Echokarten, die basierend auf der Mehrzahl an modifizierten Echokarten erzeugt sind, umfassen. Daraus kann sich ein Vorteil einer höheren Genauigkeit bei der Detektion eines Flugobjektes ergeben. Beispielsweise kann die Zusammenfassung in einer Häufungskarte oder einem Histogramm erfolgen. An Positionen, an denen ein hoher Prozentsatz der Mehrzahl von kompensierten Echokarten einen Amplitudenwert höher dem Schwellenwert anzeigt (Detektionsereignis), ist die Wahrscheinlichkeit hoch, dass sich dort tatsächlich ein Flugobjekt befindet. Dagegen kann etwa dann, wenn nur ein sehr geringer Prozentsatz der Mehrzahl von kompensierten Echokarten ein Detektionsereignis anzeigt, davon ausgegangen, dass es sich um ein Störsignal handelt. Es kann also vorteilhafterweise eine Anzahl fehlerhafter Detektionen verringert werden.

Beispielsweise umfasst das Verfahren ein Bestimmen des Schwellenwertes basierend auf einer aktuellen Detektionssituation. Dazu können Amplitudenwerte von Bereichen der Echokarten verwendet werden, in denen mit hoher Wahrscheinlichkeit kein Flugobjekt vorhanden ist oder es kann mittels anderweitiger Überwachungssysteme festgestellt werden, dass sich zum Zeitpunkt des Bestimmens kein Flugobjekt im Erfassungsbereich des Radardetektionssystems (also in der Umgebung der Windkraftanlagen) befindet. Beispielsweise kann das Verfahren ein Berechnen eines initialen Schwellenwertes auf theoretischer Grundlage unter Berücksichtigung der Größe der Windkraftanlage und/oder der Entfernung und Position der Windkraftanlage zum Sensorsystem umfassen. Beispielsweise umfasst das Verfahren ein kontinuierliches Anpassen des Schwellenwertes an eine aktuelle Detektionssituation. Dies kann etwa bei Veränderungen von Rotorblattstellungen der Windkraftanlagen vorteilhaft sein.

In Weiterbildungen des Verfahrens kann optional ein Entfernen von Artefakten aus zumindest einer der kompensierten Echokarten vorgesehen sein. Zum Entfernen der Artefakte kann beispielsweise ein Constant-False-Alarm-Rate-Algorithmus verwendet werden.

Das Verfahren kann gemäß Weiterbildungen zum Verfolgen einer Flugroute des Flugobjekts basierend auf kontinuierlichem Detektieren des Flugobjekts genutzt werden. Mit anderen Worten kann durch kontinuierliches Wiederholen des Verfahrens zum Bestimmen der Position des Flugobjekts eine Trackingfunktion bereitgestellt werden. Dazu können bekannte Tracking-Algorithmen, beispielsweise unter Verwendung eines Kalman-Filters, verwendet werden.

Das beschriebene Verfahren kann zum Überwachen des Luftraums im Bereich von Windkraftanlagen eingesetzt werden. Beispielsweise kann verfahrensgemäß ein Steuersignal zum Steuern zumindest einer Eigenschaft der zumindest einen Windkraftanlage basierend auf der Detektion eines Flugobjekts ausgegeben werden. Beispielsweise weist das Steuersignal Anweisungen zum Steuern einer Leuchtstärke von Positionslampen oder Signallampen der Windkraftanlage auf.

Anspruch 16 definiert in Computerprogramm mit Programmcode.

Ein weiterer Aspekt der Erfindung betrifft ein passives Radardetektionssystem zum Detektieren eines Flugobjekts. Das passive Radardetektionssystem umfasst zumindest zwei kohärente Empfangskanäle. Die Kanäle sind kohärent aufgebaut, z.B. weisen jeweilige den Kanälen zugeordnete Oszillatoren einen Gleichlauf auf, der deutlich länger anhält, als eine Zeitkonstante des Tiefpassfilters zum Erstellen der Stör-Echokarte. Dabei können beispielsweise Phasenfehler $< 1°$ in einer Minute auftreten.

Das passive Radardetektionssystem umfasst ferner einen Signaleingang zum Empfangen von Radarsignalen der zumindest zwei Empfangskanäle sowie eine Signalverarbeitungsvorrichtung, die ausgebildet ist, ein weiter oben oder weiter unten beschriebenes Verfahren auszuführen.

Beispielsweise ist das passive Radar-Systemen oder Radardetektionssystem ausgebildet, um mit Signalen von OFDM modulierten Beleuchtern zu arbeiten. Beispielsweise weist das Radar-System mindestens zwei Antennen und jeweilige Kanäle für den Empfang auf. Das Radar-System kann ausgebildet sein, um eine Entfernungs- und Dopplermessung in Amplitude und Phase zu ermöglichen. Die Entfernungsauflösung des Radar-Systems kann in der Größenordnung der Windrotorblätter liegen oder geringer sein, als eine Rotorblattlänge von zu detektierenden Windkraftanlagen. Die Dopplerauflösung des Radar-Systems kann in der Größenordnung der Dopplerstreuung des zu entdeckenden Luftfahrtzeugs während des Beobachtungszeitraumes liegen. Der Dopplereindeutigkeitsbereich des Radar-Systems kann größer sein als eine höchste zu erwartende Dopplerfrequenz der Windrotorblätter $f_{Dmax}$ (zur Definition von $f_{Dmax}$ siehe weiter unten).

Bei passivem Radar wird der Dopplereindeutigkeitsbereich durch die Modulation des verwendeten Beleuchters vorgegeben, im Falle eines OFDM-modulierten Signals beispielsweise durch den Trägerabstand. Wird dieser Eindeutigkeitsbereich überschritten, so werden die Signalechos eines Trägers bei der Entfernungskompression mit dem Nachbarträger korreliert und erfahren eine zufällige Phasenänderung, die vom Daten-Inhalt des OFDM-Signals abhängt. Dadurch kann nicht mehr von konstanten Phasendifferenzen ausgegangen werden. Auf dieser Konstanz basiert das beschriebene Verfahren. Das Radar-System ist folglich derart ausgelegt, dass der Eindeutigkeitsbereich nicht überschritten wird.

Beispielsweise umfasst das passive Radardetektionssystem einen Signalausgang zum Ausgeben eines Steuersignals für eine Windkraftanlage. Das Steuersignal kann Informationen umfassen, ob sich ein Flugobjekt im Bereich der Windkraftanlage befindet. Beispielsweise kann das Steuersignal in dem Fall, dass ein Flugobjekt im Bereich der Windkraftanlage detektiert wurde, Steuerbefehle zum Einschalten von Signallampen an der Windkraftanlage umfassen.

Gemäß des passiven Radardetektionssystems sind jeweilige Antennen der zumindest zwei Empfangskanäle in unterschiedlichen Positionen bezüglich der zumindest einen Windkraftanlage angeordnet. Dabei basiert ein zwischen den unterschiedlichen Positionen vorgesehener Abstand auf einer vom Radardetektionssystem verwendeten Signalfrequenz. Der Abstand zwischen den beiden Antennen kann im Bereich einer Wellenlänge einer verwendeten Signalfrequenz liegen. Beispielsweise kann ein für das passive Radar-System verwendeter Beleuchter (z.B. Funkmast) Signale im Bereich von 100 MHz bis 1000 MHz, beispielsweise 500 MHz aussenden. Beispielweise wird eine Signalfrequenz von 500 MHz verwendet und der Abstand zwischen den Antennen beträgt 60 cm, was der Wellenlänge des Signals entspricht.

Beispielsweise kann in dem zu detektierenden Bereich eine Mehrzahl an Windkraftanlagen positioniert sein. Da das beschriebene Verfahren auf rechenintensive Verfahrensschritte oder Signalverarbeitung verzichten kann, ist es möglich, dass Radar-System in einem Bereich mit vielen Windkraftanlagen, beispielsweise einem Windpark zu betreiben. Dabei können die Echosignale der Mehrzahl an Windkraftanlagen unterdrückt oder reduziert werden.

Ein weiteres Beispiel betrifft ein Radar-System mit zumindest zwei Empfangskanälen umfassend je eine Empfangsantenne und einen Signalausgang zum Ausgeben eines Empfangenen Radarsignals, wobei die Empfangsantennen an unterschiedlichen Positionen angeordnet sind. Ein solches Radar-System kann beispielsweise mit einer Vorrichtung kombiniert werden, die zum Ausführen eines beschriebenen Verfahrens ausgebildet ist.

Durch das vorgeschlagene Verfahren kann auf rechenintensive Schritte verzichtet werden und daher ein Identifizieren von Flugobjekten z.B. mit einem geringen finanziellen Aufwand auf einem kommerziell erhältlichen Computersystem in Echtzeit realisiert werden. Es kann alle vorhandene Energie der Signalechos der Luftfahrzeuge zur Entdeckung herangezogen werden, wodurch eine verbesserte Detektionsfunktion ermöglicht werden kann. Es gibt beispielsweise verfahrensgemäß keine verteilten Lücken in der Signal- und Datenverarbeitung. Auf fehlerinduzierende Prädiktionen kann verzichtet werden. Strengere Parameter (z.B. genauere Parameterbereiche) können die Zahl der falschen Erkennungen reduzieren. Eine Kalibration der Empfangskanäle kann nicht erforderlich sein. Beispielsweise bedarf es nicht der genauen Kenntnis der Antennendiagramme.

Beispiele befassen sich mit Verfahren zur Unterdrückung der Signalechoanteile von Windenergieanlagen bei der Überwachung des Luftraums mit passivem Radar.

## Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:

Fig. 1     ein Flussdiagramm eines Beispiels eines Verfahrens;

Fig. 2     eine schematische Darstellung eines Radardetektionssystems;

Fig. 3     ein Flussdiagramm eines Beispiels eines detaillierten Verfahrens zur Unterdrückung von Signalechoanteilen von Windenergieanlagen;

Fig. 4     eine beispielhafte Echokarte mit einer Position eines Flugobjekts ohne Unterdrückung von Windradechos; und

Fig. 5     eine beispielhafte Echokarte mit der Position des Flugobjekts nach einer verfahrensgemäßen Unterdrückung von Windradechos.

## Beschreibung

Verschiedene Beispiele werden nun ausführlicher Bezug nehmend auf die beiliegenden Figuren beschrieben, in denen einige Beispiele dargestellt sind. In den Figuren können die Stärken von Linien, Schichten und/oder Bereichen zur Verdeutlichung übertrieben sein.

Während sich weitere Beispiele für verschiedene Modifikationen und alternative Formen eignen, sind dementsprechend einige bestimmte Beispiele derselben in den Figuren gezeigt und werden nachfolgend ausführlich beschrieben. Allerdings beschränkt diese detaillierte Beschreibung weitere Beispiele nicht auf die beschriebenen bestimmten Formen. Weitere Beispiele können alle Modifikationen, Entsprechungen und Alternativen abdecken, die in den Rahmen der Offenbarung fallen. Gleiche oder ähnliche Bezugszeichen beziehen sich in der gesamten Beschreibung der Figuren auf gleiche oder ähnliche Elemente, die bei einem Vergleich miteinander identisch oder in modifizierter Form implementiert sein können, während sie die gleiche oder eine ähnliche Funktion bereitstellen.

Es versteht sich, dass, wenn ein Element als mit einem anderen Element "verbunden" oder "gekoppelt" bezeichnet wird, die Elemente direkt, oder über ein oder mehrere Zwischenelemente, verbunden oder gekoppelt sein können. Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht explizit oder implizit anders definiert. Eine alternative Formulierung für die gleichen Kombinationen ist "zumindest eines von A und B" oder "A und/oder B". Das Gleiche gilt, mutatis mutandis, für Kombinationen von mehr als zwei Elementen.

Die Terminologie, die hier zum Beschreiben bestimmter Beispiele verwendet wird, soll nicht begrenzend für weitere Beispiele sein. Wenn eine Singularform, z. B. "ein, eine" und "der, die, das" verwendet wird und die Verwendung nur eines einzelnen Elements weder explizit noch implizit als verpflichtend definiert ist, können weitere Beispiele auch Pluralelemente verwenden, um die gleiche Funktion zu implementieren. Wenn eine Funktion nachfolgend als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei Gebrauch das Vorhandensein der angegebenen Merkmale, Ganzzahlen, Schritte, Operationen, Prozesse, Elemente, Komponenten und/oder einer Gruppe derselben präzisieren, aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Sofern nicht anderweitig definiert, werden alle Begriffe (einschließlich technischer und wissenschaftlicher Begriffe) hier in ihrer üblichen Bedeutung auf dem Gebiet verwendet, zu dem Beispiele gehören.

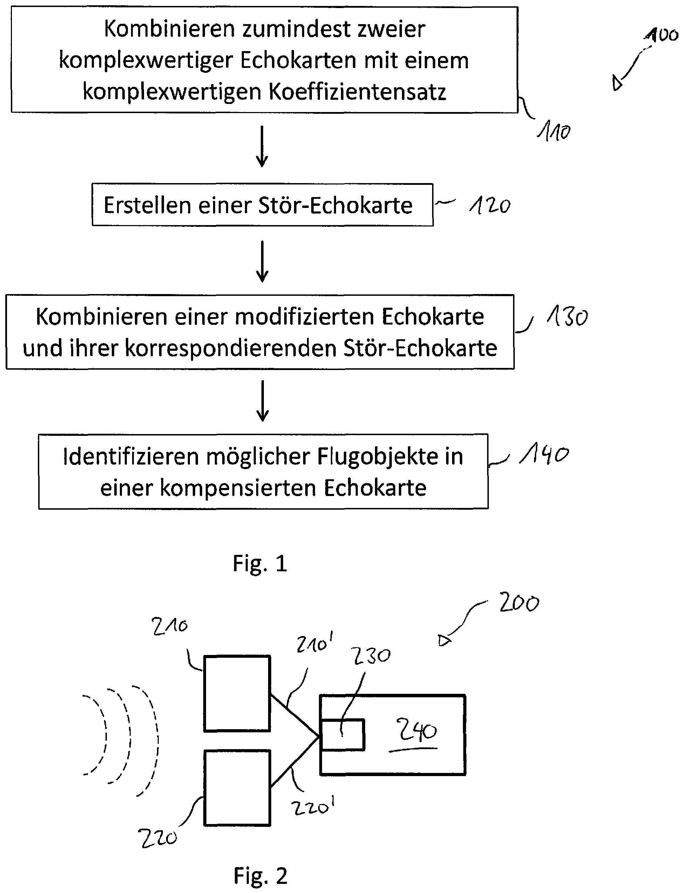

Fig. 1 zeigt ein Flussdiagramm eines Verfahrens 100 zum Detektieren eines Flugobjekts in einem Bereich zumindest einer sich in Betrieb befindlichen Windkraftanlage. Es werden zumindest zwei komplexwertige Echokarten eines passiven Radarsystems verwendet, wobei das Radarsystem zumindest zwei Eingangskanäle umfasst und die Echokarten verschiedener Eingangskanäle verwendet werden. Das Verfahren 100 umfasst ein Kombinieren 110 der zumindest zwei komplexwertigen Echokarten mit einem komplexwertigen Koeffizientensatz, um eine modifizierte Echokarte zu erzeugen, die dem Koeffizientensatz zugeordnet ist. Es erfolgt ein Erstellen 120 einer Stör-Echokarte für die modifizierte Echokarte sowie ein Kombinieren 130 der modifizierten Echokarte und ihrer korrespondierenden Stör-Echokarte, um eine kompensierte Echokarte zu erhalten, in der quasi-stationäre Signalanteile der modifizierten Echokarte reduziert sind. Schließlich erfolgt ein Identifizieren 140 möglicher Flugobjekte in der kompensierten Echokarte.

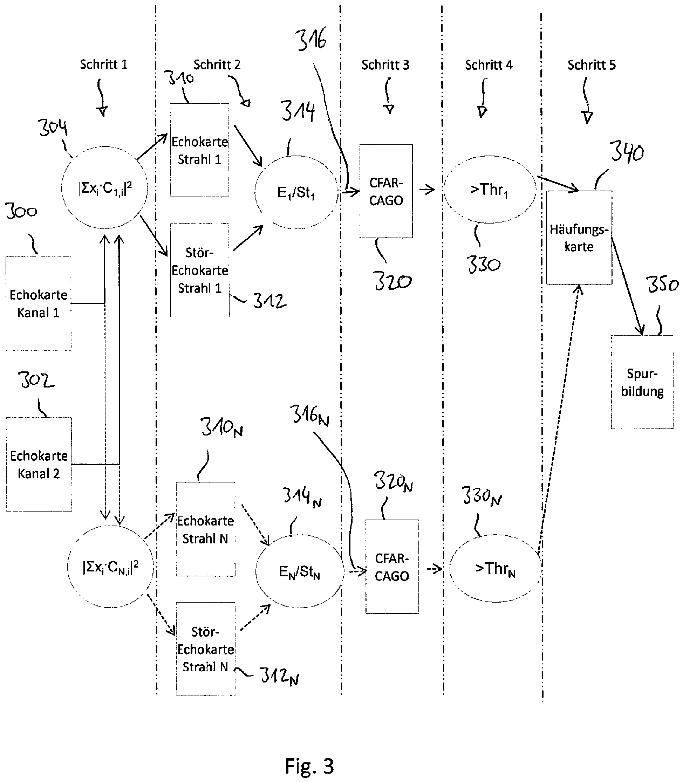

Das Verfahren 100 ermöglicht somit eine verbesserte Detektion von Flugobjekten innerhalb einer Umgebung mit Windkraftanlagen oder Windrädern, deren Rotorblätter Störungen im Radarsignal des Radardetektors verursachen können. Diese Störungen können verfahrensgemäß kompensiert oder aus dem Radarsignal herausgefiltert werden, da die von den Rotorblättern hervorgerufenen Signalanteile im Gegensatz zu der Echoantwort des sich bewegenden Flugobjektes stets wiederkehren und sich dadurch von der Echoantwort des Flugobjekts unterscheiden lassen. Weitere Details des Verfahrens 100 sind in Verbindung mit Fig. 3 beschrieben.

Fig. 2 zeigt ein schematisches Blockdiagramm eines passiven Radardetektionssystems 200 zum Detektieren eines Flugobjekts. Das passive Radardetektionssystem umfasst zumindest zwei kohärente Empfangskanäle oder Eingangskanäle 210, 220 sowie einen Signaleingang 230 zum Empfangen von Radarsignalen 210', 220' der zumindest zwei Empfangskanäle 210, 220. Das passive Radardetektionssystem umfasst ferner eine Signalverarbeitungsvorrichtung 240, die ausgebildet ist, ein Verfahren 100, wie es weiter oben oder unten beschrieben ist, auszuführen.

Das gezeigte Radardetektionssystem 200 kann aufgrund seiner zwei kohärenten Empfangskanäle 210, 220 zum Ausführen eines vorgeschlagenen Verfahrens genutzt werden. Beispielsweise ist für die beiden Empfangskanäle 210, 220 ein gemeinsames Referenzsignal oder ein gemeinsamer Taktgeber verwendet, sodass sie zumindest innerhalb eines vorbestimmten Zeitbereichs gleichlaufend arbeiten. Somit kann eine konstante Differenz von Signalanteilen der beiden Empfangskanäle, die von Rotorblattreflektionen hervorgerufen werden, erfasst werden und die entsprechenden Störsignale können kompensiert werden.

Weitere Details und Aspekte des Radardetektionssystem 200 sind in Verbindung mit weiter oben oder weiter unten ausgeführten Beispielen beschrieben.

Ein weiteres Beispiel (nicht dargestellt) betrifft ein passives Radardetektionssystem zum Detektieren eines Flugobjekts umfassend zumindest zwei kohärente Empfangskanäle 210, 220 mit je einer Empfangsantenne sowie je einem Signalausgang zum Ausgeben eines mittels der jeweiligen Empfangsantenne empfangenen Radarsignals. Die Empfangsantennen können als Radarantennen bezeichnet werden und sind beispielsweise für eine Mittenfrequenz von 500 MHz ausgelegt. Die Empfangsantennen sind dabei an unterschiedlichen Positionen mit einem vorbestimmten Abstand zueinander angeordnet. Beispielsweise liegt der vorbestimmte Abstand im Bereich einer Wellenlänge eines verwendeten Funksignals, das von einer Windkraftanlage reflektiert werden kann. Solche Signale können im Frequenzbereich von 500 MHz liegen und der vorbestimmte Abstand kann somit z.B. 60 cm betragen.

Das passive Radardetektionssystem gemäß dem weiteren Beispiel kann etwa verwendet werden, um in Verbindung mit einer zuvor genannten Signalverarbeitungsvorrichtung oder einer anderen Vorrichtung, die zum Ausführen eines beschriebenen Verfahrens ausgebildet ist, ein Flugobjekt zu detektieren.

Weitere Details und Aspekte sind in Verbindung mit weiter oben oder weiter unten ausgeführten Beispielen beschrieben. Die anhand von Fig. 2 gezeigten Beispiele können eines oder mehrere optionale, zusätzliche Merkmale aufweisen, die zu einem oder mehreren Aspekten korrespondieren, die in Verbindung mit dem vorgeschlagenen Konzept oder ein oder mehreren Beispielen weiter oben oder weiter unten beschrieben sind (zum Beispiel in Verbindung mit Fig. 1 oder Fig. 3-5).

Fig. 3 zeigt ein Flussdiagramm eines detaillierten Beispiels eines Verfahrens zum Detektieren eines Flugobjekts. Das Verfahren verwendet zwei komplexwertige Echokarten 300, 302, welche mittels unterschiedlicher Empfangskanäle eines passiven Radar-Sensors (z.B. Radardetektionssystem 200) erzeugt worden sind. Das Verfahren kann beispielsweise mit einem passiven Radar-Sensor, der mindestens 2-kanalig ausgeführt ist, durchgeführt werden.

In einem ersten Verfahrensschritt Schritt 1 werden die Echokarten 300, 302 mit einem komplexwertigen Koeffizientensatz $C_1$ multipliziert. In Schritt 1 kann z.B. ein Strahlformer verwendet werden. Somit kann eine modifizierte Echokarte 310 oder Strahl-Echokarte 310 erstellt werden. Beispielsweise wird nach der Gewinnung der komplexwertigen (Amplitude und Phase) Messwertematrix (Signalverarbeitung) für Umweglaufzeit und Dopplerverschiebung der Signalechos ein spezieller Verarbeitungsblock eingefügt, der kohärent die Matrizen (z.B. Echokarten 300, 302) der einzelnen Kanäle zusammenführt. Diese Zusammenführung geschieht z.B. mit N verschiedenen komplexen Koeffizientensätzen, so dass im Resultat N Kohärenzräume (z.B. N kohärente Strahl-Echokarten 310 bis $310_N$) entstehen.

Wie bereits erläutert wurde, wird die Eigenschaft ausgenutzt, dass das Signalecho eines Luftfahrzeugs durch seine sich ändernde Position - und damit sich kontinuierlich ändernde Phasenlage an den Empfangsantennen des Sensors - nach und nach alle Kohärenzräume durchwandert. Dahingegen hat das Signalecho eines Windrotorblattes, das nur kurz während der co-phasigen Stellung (Rotorblattblitze) auftritt, eine durch die Geometrie des Szenarios bestimmte Phasendifferenz in den Kanälen eines Sensors. Dieses wiederholt sich ständig und wird daher immer in den gleichen Kohärenzräumen abgebildet. Die co-phasige Stellung ist dann gegeben, wenn die Signallaufzeit vom Sender über jeden beliebigen Punkt auf dem Windrotorblatt zum Empfänger gleich ist - sich also alle Signalechos konstruktiv überlagern (z.B. Rotorblattblitze). Dadurch ist ein Merkmal gegeben, das es ermöglicht, die Signalechos von Luftfahrzeugen von denen der Windrotorblätter zu unterscheiden.

Eine Verbesserung in Hinsicht auf Entdeckungswahrscheinlichkeit gegenüber Material- und Rechenaufwand ist durch Wahl der Kanalzahl, der Anordnung der Antennen sowie Anzahl und Ausgestaltung der Koeffizientensätze in Abhängigkeit von der Anordnung der Windräder und des beleuchtenden Senders, der für die passive Radarfunktion genutzt wird, möglich.

Für eine weitere detaillierte Erläuterung wird ein passiver Radar-Sensor betrachtet. Dieser Sensor verfügt über zwei Empfangskanäle. Jeder Empfangskanal ist in der Lage die Amplitude und Phasenlage der Signalechos aus dem Beobachtungsraum zu messen. Die Antennen der zwei Kanäle sind jeweils so in einem Abstand zueinander angeordnet, dass sie den gleichen Beobachtungsraum einsehen und die im Beobachtungsraum auftretenden Signalechos mit unterschiedlicher Signallaufzeit und damit mit unterschiedlicher Phasenlage empfangen. Die Ergebnisse der Signalmessungen werden pro Kanal entsprechend ihrer Laufzeitdifferenz zum Beleuchter und ihrer Dopplerverschiebung in einer komplexwertigen Entfernungsdifferenz-Doppler-Matrix (Echokarte) dargestellt (Signalverarbeitung). Eine Echokarte zeigt die kohärente Aufintergration der Signalechos eines Beobachtungszeitraumes. Es werden z.B. zu äquidistanten Zeitpunkten Echokarten erzeugt, deren Zeiträume sich auch überlappen können.

Ein Luftfahrzeug bewegt sich während eines Beobachtungszeitraumes kontinuierlich fort, so dass es mehrere Entfernungszellen und durch Kurskorrektur oder Aspektwinkeländerung in der bistatischen Anordnung mehrere Dopplerzellen einer Echokarte belegen kann. Es erscheint aber als zusammenhängender begrenzter Bereich. Die Phasendifferenz in den korrespondierenden Echokarten der zwei Empfangsantennen wird maßgeblich durch den Laufzeitunterschied des Signalechos bestimmt. Sie könnte z.B. als Interferometerphase genutzt werden. Das Signalecho eines Windrotorblattes kann als die Summe aller punktförmig angenommenen Einzelechos entlang des Rotorblattes angenommen werden. Während eines Umlaufs nimmt ein Rotorblatt zweimal eine Position ein, bei der sich alle Einzelechos konstruktiv überlagern. Dies führt zu den sogenannten Rotorblattblitzen. Bei der ersten Position bewegt sich das Rotorblatt auf die bistatische Anordnung von Sender und Empfänger zu und erzeugt so ein Signalecho mit positiver Dopplerverschiebung, bei der zweiten Position bewegt es sich weg und erzeugt eine negative Dopplerverschiebung. Die Phasenlagen der Signalechos der Rotorblattblitze sind für die jeweilige Position wiederkehrend identisch.

Die Signalechos der Rotorblätter verteilen sich in Dopplerrichtung wegen der enthaltenen Geschwindigkeiten der punktförmigen Einzelechos jeweils von 0 Hz bis hin zu $f_{Dmax}$, bzw. $-f_{Dmax}$. Es gilt

$$f_{\text{Dmax}} = \frac{2\omega r}{\lambda} cos(\delta) cos\left(\frac{\beta}{2}\right)$$

. Dabei ist r die Länge eines Rotorblattes, $\omega$ die Winkelgeschwindigkeit des Rotors und $\lambda$ die kleinste Wellenlänge des Beleuchtersignals. 5 ist der Winkel zwischen tangentialer Rotorblattbewegung und der Winkelhalbierenden des bistatischen Winkels und $\beta$ ist der bistatische Winkel. Im Gegensatz zu einem Luftfahrzeug kommt bei einem Rotorblatt zur Phasendifferenz durch die Laufzeitunterschiede der Signalechos eine zusätzliche Differenz hinzu. Diese Differenz entsteht dadurch, dass die Rotorblattblitze für die beiden Empfangsantennen zu unterschiedlichen Zeiten auftreten. Der Zeitpunkt des Erreichens der co-phasigen Stellung hängt von der Position der Empfangsantenne im Raum ab. Die zur Auflösung in Dopplerrichtung benutzte FourierTransformation kennt dazu die betreffende

Regel: $s(t-t_0) \circ\!\!\!-\!\!\bullet\ S(f)e^{-j2\pi f t_0}$ . Dabei ist $t_0$ die zeitliche Differenz des Auftretens der co-phasigen Stellung. Dadurch kann die Phasendifferenz eines Rotorblattblitzes für verschiedene Dopplerfrequenzen f beliebige Werte annehmen, die somit nicht nach dem Interferometerprinzip auf den Einfallswinkel schließen lassen.

Die Bewegung eines Windrotors ist ein periodischer Vorgang dessen charakteristische Grö-ßen im Vergleich zu den Betrachtungszeiträumen zur Erzeugung der Echokarten als konstant angesehen werden kann. Daher erscheint das Signalecho eines Windrotorblattes in zeitlich aufeinanderfolgenden Echokarten immer in den gleichen Entfernungsdifferenz- und Dopplerzellen, bei konstanten Phasen- und Amplitudendifferenzen zwischen den Empfangskanälen. Ein grundlegender Aspekt ist es, wie bereits erläutert wurde, die Unterschiede in den Eigenschaften der Phasendifferenzen der Signalechos in diesem Verfahren zu nutzen.

Fig. 3 zeigt einen für Schritt 1 eingesetzten Prozessierungsblock 304, der in der klassischen Radartechnik z.B. als Strahlformer bekannt ist. Somit kann die in Schritt 1 erzeugte modifizierte Echokarte 310 auch als Strahl-Echokarte 310 bezeichnet werden. Verfahrensgemäß wird der Strahlformer zur Differenzierung von sich wiederholenden Windradechos mit konstanten Phasen- und Amplitudendifferenzen gegenüber sich kontinuierlich verändernder Phasendifferenz eines Luftfahrzeugs benutzt. Die Phasen- und Amplitudendifferenz wird dabei für jede Zelle der Echokarte zwischen den zwei Empfangskanälen gemessen.

Dazu werden z.B. die Echokarten 300, 302 elementweise mit einem Strahlformungsvektor C mit N komplexwertigen Koeffizientensätzen $C_1$ bis $C_N$ multipliziert. Als Ergebnis entstehen N kohärente Strahl-Echokarten 310 bis 310rr (Kohärenzräume). Die Koeffizienten sind dabei so gewählt, dass die zu erwartenden Phasen- und Amplitudendifferenzen der Rotorblattechos berücksichtigt werden. Eine Realisierung von C kann dabei die Gleichverteilung auf dem Einheitskreis in der komplexen Ebene sein: $C_N = \begin{pmatrix} A_n \\ e^{j2\pi\frac{n}{N}} \end{pmatrix}$ . Die Amplitudendifferenzen werden dabei durch $A_n$ berücksichtigt. Der Begriff Strahl beschreibt hier z.B. keine räumlich zuordenbare Richtung, sondern die Phasen- und Amplitudenverhältnisse in den ausgehenden Echokarten. Das Signalecho eines Windrotorblatts, zeigt sich danach in bestimmten Strahl-Echokarten und verbleibt in diesen, bis sich die Orientierung der Rotorachse, die Drehzahl oder die Blattstellung des korrespondierenden Windrades maßgeblich ändert. Das dauert im Allgemeinen deutlich länger als die Beobachtungszeit mehrerer zeitlich aufeinander folgender Echokarten. Ein jedes Rotorblatt kann nach diesem Verfahrensschritt innerhalb der Strahl- Echokarten als quasi-statisch in Bezug auf Entfernungsdifferenz und Doppler angesehen werden. Im Weiteren wird für jede Zelle z.B. nur noch das Quadrat ihrer Amplitude betrachtet (s. Bezugszeichen 304 in Fig. 3).

In einem zweiten Verfahrensschritt Schritt 2 werden mit Hilfe einer z.B. in der Radartechnik bekannten Stör-Echokarte 312, $312_N$ pro Strahl die beschriebenen quasi-statischen Echos unterdrückt. Ein sich räumlich bewegendes Luftfahrzeug durchwandert bedingt durch seine Bewegung die Strahl-Echokarten 310, $310_N$ und innerhalb dieser die einzelnen Entfernungsdifferenz- und Doppler-Zellen. Somit wird es weder durch die Strahlformung einer bestimmten Strahl-Echokarte 310, $310_N$ dauerhaft zugeordnet, noch wird es in einer Strahl-Echokarte 310, 310rr von deren Stör-Echokarte 312, $312_N$ unterdrückt. Die Stör-Echokarte 312, $312_N$ ist z.B. durch Verwendung eines Exponentialfilters pro Zelle realisiert: $a_{n+1} = a_n (1-a)+x * \alpha$. Dabei ist a eine Zelle der Stör-Echokarte 312, $312_N$ im n-ten Zeitabschnitt, x eine Zelle aus der Strahl-Echokarte 310, 310N und $\alpha$ ist der Glättungsfaktor. Exponentialfilter weisen eine Tiefpasscharakteristik auf, die die Anpassung an sich langsam ändernde Begebenheiten erlauben. Dies trägt dem Umstand Rechnung, dass der Wind und damit die Ausrichtung und Geschwindigkeit der Windräder sich ändern kann. Echokarte 310 und Stör-Echokarte 312 können mittels eines Dividierers 314 verarbeitet werden. Mittels des Dividierers 314 kann somit eine kompensierte Echokarte 316 erzeugt werden, die am Ausgang des Dividierers 314 vorliegen kann.

Fig. 3 zeigt ferner einen optionalen dritten Verfahrensschritt Schritt 3. In diesem ist ein Prozessierungsblock 320 verwendet, der unter dem Namen CFAR (Constant false alarm rate - Konstante Falschalarmrate) bekannt ist. Er wird wieder jeweils pro Strahl (Strahl$_1$ bis Strahlrr) angewandt. Er setzt den Wert einer Zelle in das Verhältnis zu ihrer Umgebung. Dabei wird die Umgebung hier in vier Bereiche aufgeteilt, die in der entstörten Strahl-Echokarte (z.B. die kompensierte Echokarte am Ausgang des Dividierers 314) links, rechts, oben und unten um die Testzelle herum angeordnet sind. Als Besonderheit bei dieser Anwendung wird der Umgebungssektor ausgewählt, dessen Mittelwert seiner Zellen am größten ist (CFAR-CAGO: Cell Average Greatest Of). Dadurch werden beispielsweise Artefakte unterdrückt, die entstehen, wenn der Beobachtungszeitraum temporär zeitlich so zu liegen kommt, dass kein Windradecho in einem Umgebungssektor enthalten ist, aber dennoch die Stör-Echokarte die Amplitude in diesem Sektor reduziert.

Fig. 3 zeigt ferner einen vierten Verfahrensschritt Schritt 4, in dem in jeder (z.B. entstörten) Strahl-Echokarte die Zellen identifiziert werden, deren Amplitude über einem Schwellwert oder Schwellenwert 330 (z.B. Thri) liegt. Zur Bestimmung dieser Schwellwerte wird in der jeweiligen Strahl-Echokarte (Echokarten 1-N) ein Bereich ausgewählt, in dem keine Echos erwartet werden. Das ist üblicherweise bei großen Entfernungsdifferenz- und hohen Dopplerwerten der Fall. In diesem Bereich wird der Schwellwert so gewählt, dass ein vorgegebener Anteil von Zellen darüber liegt. Der Schwellenwert kann also empirisch anhand der Detektionssituation eingestellt oder ausgewählt werden. Alternativ ist es möglich, den Schwellwert aus einer theoretischen Betrachtung der Statistik der Echosignale heraus zu bestimmen.

Fig. 3 zeigt ferner einen optionalen fünften Verfahrensschritt Schritt 5. Dieser fasst alle mittels des Schwellenwertes 330 identifizierten Zellen basierend auf allen Strahl-Echokarten in einer Häufungskarte 340 zusammen und bestimmt zusammenhängende Bereiche. Für jeden Bereich werden dessen Parameter geschätzt. Als Parameter werden z.B. die Lage des Schwerpunktes, des Maximums, die Werte mittleren und maximalen Signalpegels, sowie die Ausdehnung in Entfernungsdifferenz- und Dopplerrichtung herangezogen. Zur Anknüpfung an die weiteren bestehenden Verfahrensschritte des Radar-Sensors werden z.B. einem anschließenden Spurbildungsalgorithmus 350 die Lage der Schwerpunkte als Messwerte für Entfernungsdifferenz und Doppler übergeben. Aus dem Signalpegel des Maximums und der Ausdehnung können die Kovarianzen dieser Messwerte geschätzt werden.

Alternativ kann jedoch auf die Zusammenfassung aller in Schritt 4 identifizierten Zelle in der Häufungskarte 340 ganz verzichtet wird oder nur zusammenhängende Bereiche innerhalb einer Strahl-Echokarte zum nachfolgenden Spurbildungsalgorithmus 350 geführt werden. Die Zusammenführung der Strahlen (modifizierte Echokarten 1 bis N) kann z.B. in einem Spurverbindungs-algorithmus (z.B. Track-Merge) erfolgen.

Durch das vorgeschlagene Verfahren kann die Signalverarbeitung in äquidistanten, lückenlosen Zeitabschnitten - die Abschnitte können sich z.B. überlappen - durchgeführt werden, die auf allen Sensoren eines Netzwerks identisch sind. Dadurch können z.B. Prädiktionsfehler bei der Bildung der Schnittpunkte der Lauzeitellipsoide minimiert werden. Die Parameter der Verfahrensschritte können vorteilhafterweise strenger oder genauer gewählt werden können, um etwa falsche Erkennungen zu reduzieren. Das Verfahren kann z.B. die Signalechos von Windenergieanlagen entsprechend ihrer Eigenschaften unterdrücken und nicht überspringen, um nicht beim Überspringen Signalechoenergie eines zu entdeckenden Luftfahrzeugs zu verlieren. Beispielsweise ist das Verfahren nicht unnötig komplex, sodass es auf einer preiswerten Rechnerarchitektur in Echtzeit lauffähig sein kann.

Weitere Details und Aspekte sind in Verbindung mit weiter oben oder weiter unten ausgeführten Beispielen beschrieben. Die anhand von Fig. 3 gezeigten Beispiele können eines oder mehrere optionale, zusätzliche Merkmale aufweisen, die zu einem oder mehreren Aspekten korrespondieren, die in Verbindung mit dem vorgeschlagenen Konzept oder ein oder mehreren Beispielen weiter oben oder weiter unten beschrieben sind (zum Beispiel in Verbindung mit Fig. 1-2 oder Fig. 4-5).

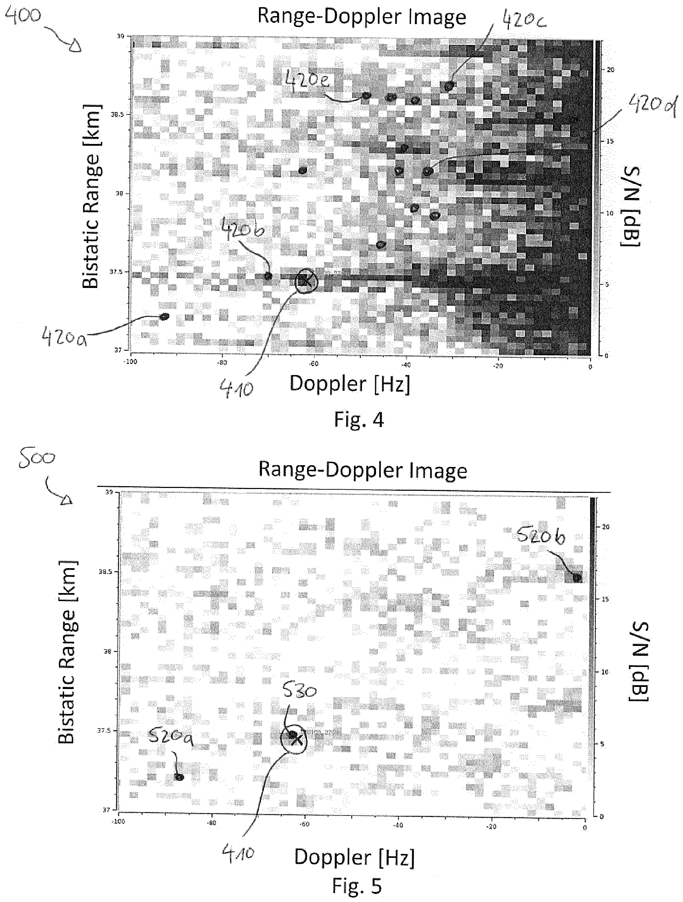

Fig. 4 zeigt eine beispielhafte Echokarte 400 mit Position 410 eines Flugobjekts ohne Unterdrückung von Windradechos 420a, 420b, 420c, 420d, 420e (ausgefüllte, kreisförmige Punkte in Fig. 4). Die Position 410 des Flugobjekts ist z.B. aufgrund der Verwendung eines GPS-Signals bekannt. Es ist zu erkennen, dass eine Vielzahl von Störsignalen oder Windradechos 420a, 420b, 420c, 420d, 420e in der Echokarte 400 vorhanden sind. Aufgrund der vielen Störsignale ist an der Position 410 des Flugobjekts dagegen kein Detektionssignal vorhanden. Mit anderen Worten verhindern die Störsignale der Windkraftanlagen die Möglichkeit der Detektion des Flugobjekts.

In Fig. 4 ist die Echokarte 400 (beispielsweise eine der in Verbindung mit Fig. 3 beschriebenen Echokarten 300, 302 eines Empfangskanals) vor Anwendung des beschriebenen Verfahrens gezeigt. Ein Flugobjekt, z.B. ein Ultraleichtflugzeug, wurde mit einem GPS-Logger ausgestattet, der es erlaubt die zu erwartende Signalechoposition in der Echokarte mit X zu markieren (Position 410). Die tatsächlich vom Radar-Sensor gefundenen Entdeckungen sind mit soliden Punkten markiert (Windradechos 420a, 420b, 420c, 420d, 420e). Zu erkennen sind die starken Signalechos der Windrotorblätter (Windradechos 420a, 420b, 420c, 420d, 420e) - z.B. des negativ-wertigen Dopplerbereichs. Das vorhandene Signalecho des Luftfahrzeuges wird durch einen Blattblitz überlagert und führt zu einer fehlerhaften Entdeckung bzw. dazu, dass an der Position 410 kein Echo entdeckt werden kann. Zusätzlich sind viele weitere falsche Entdeckungen vorhanden.

In Fig. 5 ist eine beispielhafte Echokarte 500 mit der Position 410 des Flugobjekts nach Unterdrückung von Windradechos dargestellt. Zur Unterdrückung der Windradechos (beispielsweise der Windradechos 420a, 420b, 420c, 420d, 420e, vgl. Fig. 4) wurde ein beschriebenes Verfahren verwendet.

Fig. 5 zeigt mit anderen Worten eine entstörte, resultierende Echokarte 500 (z.B. die kompensierte Echokarte 500) z.B. nach Anwendung des CFAR Blockes (vgl. Block 320 aus Fig. 3), zum Beispiel das Ergebnis von Schritt 3 aus Fig. 3. Zur Darstellung ist aus allen Strahlen jeweils das Maximum pro Zelle ausgewählt. Die Signalechos der Windrotorblätter sind nahezu gänzlich unterdrückt. Zum Beispiel ist ein Großteil der Anzahl an Windradechos 420a, 420b, 420c, 420d, 420e herausgefiltert. Eine Entdeckung des Radar-Sensors, ein Punkt 530 der Echokarte, an dem z.B. der Signalanteil über dem Schwellenwert 330 liegt oder ein nach Schritt 5 aus Fig. 3 mittels der Häufungskarte identifizierter Bereich liegt nun an der erwarteten Position 410.

Durch das beschriebene Verfahren können also die Störsignale der Windrotorblätter unterdrückt werden, sodass sie nicht mehr das eigentliche Echosignal des zu detektieren den Flugobjekt des überdecken.

Weitere Details und Aspekte sind in Verbindung mit weiter oben oder weiter unten ausgeführten Beispielen beschrieben. Die anhand von Fig. 4 und 5 gezeigten Beispiele können eines oder mehrere optionale, zusätzliche Merkmale aufweisen, die zu einem oder mehreren Aspekten korrespondieren, die in Verbindung mit dem vorgeschlagenen Konzept oder ein oder mehreren Beispielen weiter oben oder weiter unten beschrieben sind (zum Beispiel in Verbindung mit Fig. 1-3).

Das beschriebene Verfahren und das beschriebene passive Radardetektionssystem können beispielsweise zur Überwachung des Luftverkehrs im Bereich von Windparks verwendet werden. Windenergieanlagen unterliegen etwa der Allgemeinen Verwaltungsvorschrift (AVV) zur Kennzeichnung von Luftfahrthindernissen. Für die Luftverkehrssicherheit hindernisrelevante Bauwerke sind danach z.B. mit einer Tages- und Nachtkennzeichnung zu versehen. Die AVV erlaubt es z.B. die Nachtkennzeichnung bedarfsgerecht zu steuern, etwa um die Belastung der Bevölkerung durch Lichtemissionen zu reduzieren und damit die Akzeptanz der Windenergie zu fördern. Zur Erkennung des Bedarfs - die Anwesenheit eines Luftfahrtzeugs - werden dabei üblicherweise Radar-Systeme eingesetzt. Im Erkennungsbereich der Radar-Systeme befinden sich Windenergieanlagen, deren rotierenden Anlagenteile (Windrotorblätter) die Erkennung von Luftfahrtzeugen erschweren können, bzw. zu falschen Erkennungen führen können. Somit kann ein vorgeschlagenes Verfahren zur Unterdrückung der Windradechos eine Detektionssicherheit erhöhen, bzw. zu weniger unnötig eingeschalteter Nachtkennzeichnung führen.

Die Aspekte und Merkmale, die zusammen mit einem oder mehreren der vorher detaillierten Beispiele und Figuren beschrieben sind, können auch mit einem oder mehreren der anderen Beispiele kombiniert werden, um ein gleiches Merkmal des anderen Beispiels zu ersetzen oder um das Merkmal in das andere Beispiel zusätzlich einzuführen.

Beispiele können weiterhin ein Computerprogramm mit einem Programmcode zum Ausführen eines oder mehrerer der obigen Verfahren sein oder sich darauf beziehen, wenn das Computerprogramm auf einem Computer oder Prozessor ausgeführt wird. Schritte, Operationen oder Prozesse von verschiedenen, oben beschriebenen Verfahren können durch programmierte Computer oder Prozessoren ausgeführt werden. Beispiele können auch Programmspeichervorrichtungen, z. B. Digitaldatenspeichermedien, abdecken, die maschinen-, prozessor- oder computerlesbar sind und maschinenausführbare, prozessorausführbare oder computerausführbare Programme von Anweisungen codieren. Die Anweisungen führen einige oder alle der Schritte der oben beschriebenen Verfahren aus oder verursachen deren Ausführung. Die Programmspeichervorrichtungen können z. B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren oder Steuereinheiten, die zum Ausführen der Schritte der oben beschriebenen Verfahren programmiert sind, oder (feld-)programmierbare Logik-Arrays ((F)PLAs = (Field) Programmable Logic Arrays) oder (feld-)programmierbare Gate-Arrays ((F)PGA = (Field) Programmable Gate Arrays), die zum Ausführen der Schritte der oben beschriebenen Verfahren programmiert sind, abdecken.

Durch die Beschreibung und Zeichnungen werden nur die Grundsätze der Offenbarung dargestellt. Weiterhin sollen alle hier aufgeführten Beispiele grundsätzlich ausdrücklich nur illustrativen Zwecken dienen, um den Leser beim Verständnis der Grundsätze der Offenbarung und der durch den (die) Erfinder beigetragenen Konzepte zur Weiterentwicklung der Technik zu unterstützen. Alle hiesigen Aussagen über Grundsätze, Aspekte und Beispiele der Offenbarung sowie konkrete Beispiele derselben umfassen deren Entsprechungen.

Ein als "Mittel zum..." Ausführen einer bestimmten Funktion bezeichneter Funktionsblock kann sich auf eine Schaltung beziehen, die ausgebildet ist zum Ausführen einer bestimmten Funktion. Somit kann ein "Mittel für etwas" als ein "Mittel ausgebildet für oder geeignet für etwas" implementiert sein, z. B. ein Bauelement oder eine Schaltung ausgebildet für oder geeignet für die jeweilige Aufgabe.

Funktionen verschiedener in den Figuren gezeigter Elemente einschließlich jeder als "Mittel", "Mittel zum Bereitstellen eines Signals", "Mittel zum Erzeugen eines Signals", etc. bezeichneter Funktionsblöcke kann in Form dedizierter Hardware, z. B "eines Signalanbieters", "einer Signalverarbeitungseinheit", "eines Prozessors", "einer Steuerung" etc. sowie als Hardware fähig zum Ausführen von Software in Verbindung mit zugehöriger Software implementiert sein. Bei Bereitstellung durch einen Prozessor können die Funktionen durch einen einzelnen dedizierten Prozessor, durch einen einzelnen gemeinschaftlich verwendeten Prozessor oder durch eine Mehrzahl von individuellen Prozessoren bereitgestellt sein, von denen einige oder von denen alle gemeinschaftlich verwendet werden können. Allerdings ist der Begriff "Prozessor" oder "Steuerung" bei Weitem nicht auf ausschließlich zur Ausführung von Software fähige Hardware begrenzt, sondern kann Digitalsignalprozessor-Hardware (DSP-Hardware; DSP = Digital Signal Processor), Netzprozessor, anwendungsspezifische integrierte Schaltung (ASIC = Application Specific Integrated Circuit), feldprogrammierbare Logikanordnung (FPGA = Field Programmable Gate Array), Nurlesespeicher (ROM = Read Only Memory) zum Speichern von Software, Direktzugriffsspeicher (RAM = Random Access Memory) und nichtflüchtige Speichervorrichtung (storage) umfassen. Sonstige Hardware, herkömmliche und/oder kundenspezifische, kann auch eingeschlossen sein.

Ein Blockdiagramm kann zum Beispiel ein grobes Schaltdiagramm darstellen, das die Grundsätze der Offenbarung implementiert. Auf ähnliche Weise können ein Flussdiagramm, ein Ablaufdiagramm, ein Zustandsübergangsdiagramm, ein Pseudocode und dergleichen verschiedene Prozesse, Operationen oder Schritte repräsentieren, die zum Beispiel im Wesentlichen in computerlesbarem Medium dargestellt und so durch einen Computer oder Prozessor ausgeführt werden, ungeachtet dessen, ob ein solcher Computer oder Prozessor explizit gezeigt ist. In der Beschreibung oder in den Patentansprüchen offenbarte Verfahren können durch ein Bauelement implementiert werden, das ein Mittel zum Ausführen eines jeden der jeweiligen Schritte dieser Verfahren aufweist.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht austauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

**Patentansprüche**

1. Computer implementiertes Verfahren (100) zum Detektieren eines Flugobjekts in einem Bereich zumindest einer sich in Betrieb befindlichen Windkraftanlage, basierend auf zumindest zwei komplexwertigen Echokarten (300, 302) eines passiven Radarsystems (200) mit zumindest einem Eingangskanal (210, 220) pro Echokarte (300, 302), das Verfahren (100) umfassend:

    Kombinieren (110) der zumindest zwei komplexwertigen Echokarten (300, 302) mit einem komplexwertigen Koeffizientensatz ($C_1$), um eine modifizierte Echokarte (310) zu erzeugen, die dem Koeffizientensatz ($C_1$) zugeordnet ist, wobei Signale zur Erzeugung der zumindest zwei komplexwertigen Echokarten (300, 302) von Antennen der Kanäle der komplexwertigen Echokarten (300, 302) stammen, die in einem Abstand zueinander angeordnet, sodass sie den gleichen Beobachtungsraum einsehen und die im Beobachtungsraum auftretenden Signalechos mit unterschiedlicher Signallaufzeit empfangen,
    wobei der Koeffizientensatz ($C_1$) an eine geometrische Anordnung der Windkraftanlage und des Radarsystems (200) angepasst ist,
    wobei das Kombinieren (110) der zumindest zwei komplexwertigen Echokarten (300, 302) ein elementweises Multiplizieren zumindest einer Echokarte (300, 302) mit dem komplexwertigen Koeffizientensatz (C1) umfasst,
    und wobei die modifizierte Echokarte als Strahl-Echokarte ausgeführt ist,
    Erstellen (120) einer Stör-Echokarte (312) für die modifizierte Echokarte (310),
    wobei das Erstellen der Stör-Echokarten ein Verwenden eines Tiefpassfilters umfasst;
    Kombinieren (130) der modifizierten Echokarte (310) und ihrer korrespondierenden Stör-Echokarte (312), um eine kompensierte Echokarte (316) zu erhalten, in der quasi-stationäre Signalanteile der modifizierten Echokarte (310) reduziert sind; und
    Identifizieren (140) möglicher Flugobjekte in der kompensierten Echokarte (316).

2. Computer implementiertes Verfahren (100) gemäß Anspruch 1, das Kombinieren (110) der zumindest zwei komplexwertigen Echokarten (300, 302) umfassend:
    Erzeugen eines Differenzsignals basierend auf den zumindest zwei komplexwertigen Echokarten (300, 302).

3. Computer implementiertes Verfahren (100) gemäß Anspruch 1 oder 2, das Kombinieren (110) der zumindest zwei komplexwertigen Echokarten (300, 302) umfassend:
    Erzeugen einer Mehrzahl an modifizierten Echokarten, die dem Koeffizientensatz ($C_1$) zugeordnet sind.

4. Computer implementiertes Verfahren (100) gemäß einem der vorhergehenden Ansprüche, das Kombinieren (110) der zumindest zwei komplexwertigen Echokarten (300, 302) umfassend:
    Verwenden eines Strahlformers.

5. Computer implementiertes Verfahren (100) gemäß einem der vorhergehenden Ansprüche, ferner umfassend:
Verwenden zumindest zweier verschiedener komplexwertiger Koeffizientensätze ($C_1$, $C_N$), um zumindest zweimal eine jeweils auf einem der Koeffizientensätze ($C_1$, $C_N$) basierende modifizierte Echokarte (310, $3 10_N$) zu erzeugen.

6. Computer implementiertes Verfahren (100) gemäß einem der vorhergehenden Ansprüche, wobei der Koeffizientensatz ($C_1$) komplexwertige Komponenten umfasst, die symmetrisch im Einheitskreis angeordnet sind.

7. Computer implementiertes Verfahren (100) gemäß einem der vorhergehenden Ansprüche, ferner umfassend:
adaptives Anpassen des komplexwertigen Koeffizientensatzes ($C_1$) basierend auf einer aktuellen Detektionssituation.

8. Computer implementiertes Verfahren (100) gemäß einem der vorhergehenden Ansprüche, das Kombinieren (130) der modifizierten Echokarte (310) und ihrer korrespondierenden Stör-Echokarte (312) umfassend:
Dividieren (314) der Werte der modifizierten Echokarte (310) durch die Werte ihrer korrespondierenden Stör-Echokarte (312).

9. Computer implementiertes Verfahren (100) gemäß einem der vorhergehenden Ansprüche 3 bis 8, das Identifizieren (140) möglicher Flugobj ekte ferner umfassend:
Zusammenfassen ermittelter Elemente mit einem Amplitudenwert größer einem Schwellenwert (330) aus einer Mehrzahl an kompensierten Echokarten (316, $316_N$), die basierend auf der Mehrzahl an modifizierten Echokarten (310, $3 10_N$) erzeugt sind.

10. Computer implementiertes Verfahren (100) gemäß Anspruch 9, umfassend:
Bestimmen des Schwellenwertes (330) basierend auf einer aktuellen Detektionssituation.

11. Computer implementiertes Verfahren (100) gemäß einem der vorhergehenden Ansprüche 9 oder 10, umfassend:
kontinuierliches Anpassen des Schwellenwertes (330) an eine aktuelle Detektionssituation.

12. Computer implementiertes Verfahren (100) gemäß einem der vorhergehenden Ansprüche, ferner umfassend:
Entfernen von Artefakten aus zumindest einer der kompensierten Echokarten.

13. Computer implementiertes Verfahren (100) gemäß Anspruch 12, umfassend Verwenden eines Constant-False-Alarm-Rate-Algorithmus (320) zum Entfernen der Artefakte.

14. Computer implementiertes Verfahren (100) gemäß einem der vorhergehenden Ansprüche, wobei die Echokarten (300, 302) Range-Doppler-Signalanteile aufweisen.

15. Computer implementiertes Verfahren (100) gemäß einem der vorhergehenden Ansprüche, ferner umfassend:
Ausgeben eines Steuersignals zum Steuern zumindest einer Eigenschaft der zumindest einen Windkraftanlage basierend auf der Detektion eines Flugobjekts.

16. Computerprogramm mit Programmcode, das bei Ausführen des Codes auf einem programmierbaren Prozessor ein computer implementiertes Verfahren (100) gemäß einem der vorhergehenden Ansprüche ausführen lässt.

17. Passives Radardetektionssystem (200) zum Detektieren eines Flugobjekts, umfassend zumindest zwei kohärente Empfangskanäle (210, 220);

einen Signaleingang (230) zum Empfangen von Radarsignalen (210', 220') der zumindest zwei Empfangskanäle (210, 220); und
eine Signalverarbeitungsvorrichtung (240), die ausgebildet ist, ein computer implementiertes Verfahren (100) gemäß einem der vorhergehenden Ansprüche auszuführen.

18. Passives Radardetektionssystem (200) gemäß Anspruch 17, wobei jeweilige Antennen der zumindest zwei Empfangskanäle (210, 220) in unterschiedlichen Positionen bezüglich der zumindest einen Windkraftanlage angeordnet sind, wobei ein zwischen den unterschiedlichen Positionen vorgesehener Abstand auf einer vom Radardetektionssystem verwendeten Signalfrequenz basiert.

**Claims**

1. A computer-implemented method (100) for detecting a flying object in an area of at least one operating wind turbine, based on at least two complex-valued echo maps (300, 302) of a passive radar system (200) with at least one input channel (210, 220) per echo map (300, 302), the method (100) comprising:

combining (110) the at least two complex-valued echo maps (300, 302) with a complex-valued coefficient set ($C_1$) to generate a modified echo map (310) associated with the coefficient set

(C$_1$),

wherein signals for generating the at least two complex-valued echo maps (300, 302) originate from antennas of the channels of the complex-valued echo maps (300, 302), which are arranged at a distance from each other such that they view the same observation space and receive the signal echoes occurring in the observation space with different signal propagation time,

wherein the coefficient set (C$_1$) is adapted to a geometric arrangement of the wind turbine and the radar system (200),

wherein combining (110) the at least two complex-valued echo maps (300, 302) comprises element-wise multiplying at least one echo map (300, 302) with the complex-valued coefficient set (C1),

and wherein the modified echo map is embodied as a beam echo map,

creating (120) a spurious echo map (312) for the modified echo map (310),

wherein creating the spurious echo maps comprises using a low-pass filter;

combining (130) the modified echo map (310) and its corresponding spurious echo map (312) to obtain a compensated echo map (316) in which quasi-stationary signal components of the modified echo map (310) are reduced; and

identifying (140) possible flying objects in the compensated echo map (316).

2. The computer-implemented method (100) of claim 1, wherein combining (110) the at least two complex-valued echo maps (300, 302) comprises:
generating a difference signal based on the at least two complex-valued echo maps (300, 302).

3. The computer-implemented method (100) of claim 1 or 2, wherein combining (110) the at least two complex-valued echo maps (300, 302) comprises:
generating a plurality of modified echo maps associated with the coefficient set (C$_1$).

4. The computer-implemented method (100) of any one of the preceding claims, wherein combining (110) the at least two complex-valued echo maps (300, 302) comprises:
using a beamformer.

5. The computer-implemented method (100) of any one of the preceding claims, further comprising:
using at least two different complex-valued coefficient sets (C$_1$, C$_N$) to generate at least twice a modified echo map (310, 310$_N$) respectively based on one of the coefficient sets (C$_1$, C$_N$).

6. The computer-implemented method (100) of any one of the preceding claims,
wherein the coefficient set (C$_1$) comprises complex-valued components arranged symmetrically in the unit circle.

7. The computer-implemented method (100) of any one of the preceding claims, further comprising:
adaptively adapting the complex-valued coefficient set (C$_1$) based on a current detection situation.

8. The computer-implemented method (100) of any one of the preceding claims, wherein combining (130) the modified echo map (310) and its corresponding spurious echo map (312) comprises:
dividing (314) the values of the modified echo map (310) by the values of its corresponding spurious echo map (312).

9. The computer-implemented method (100) of any one of the preceding claims 3 to 8, wherein identifying (140) possible flight objects further comprises:
combining determined elements having an amplitude value greater than a threshold value (330) from a plurality of compensated echo maps (316, 316$_N$) generated based on the plurality of modified echo maps (310, 310$_N$).

10. The computer-implemented method (100) of claim 9, comprising:
determining the threshold value (330) based on a current detection situation.

11. The computer-implemented method (100) of any one of the preceding claims 9 or 10, comprising:
continuously adapting the threshold value (330) to a current detection situation.

12. The computer-implemented method (100) of any one of the preceding claims, further comprising:
removing artifacts from at least one of the compensated echo maps.

13. The computer-implemented method (100) of claim 12, comprising using a constant false alarm rate algorithm (320) to remove the artifacts.

14. The computer-implemented method (100) of any one of the preceding claims, wherein the echo maps (300, 302) have range Doppler signal components.

15. The computer-implemented method (100) of any one of the preceding claims, further comprising:
outputting a control signal for controlling at least one property of the at least one wind turbine based on the detection of a flying object.

16. A computer program having program code which, when the code is executed on a programmable processor, causes a computer-implemented method (100) according to any one of the preceding claims to be carried out.

17. A passive radar detection system (200) for detecting a flying object, comprising at least two coherent reception channels (210, 220);

a signal input (230) for receiving radar signals (210', 220') of the at least two reception channels (210, 220); and
a signal processing device (240) configured to carry out a computer-implemented method (100) according to any one of the preceding claims.

18. The passive radar detection system (200) of claim 17,
wherein respective antennas of the at least two reception channels (210, 220) are arranged at different positions with respect to the at least one wind turbine, wherein a distance provided between the different positions is based on a signal frequency used by the radar detection system.

**Revendications**

1. Procédé mis en oeuvre par ordinateur (100) pour détecter un objet volant dans une zone d'au moins une éolienne en fonctionnement, sur la base d'au moins deux cartes d'écho à valeur complexe (300, 302) d'un système radar passif (200) avec au moins un canal d'entrée (210, 220) par carte d'écho (300, 302), le procédé (100) comprenant le fait de :

combiner (110) les au moins deux cartes d'écho à valeur complexe (300, 302) avec un ensemble de coefficients à valeur complexe $(C_1)$ pour générer une carte d'écho modifiée (310) associée à l'ensemble de coefficients $(C_1)$,
dans lequel des signaux pour générer les au moins deux cartes d'écho à valeur complexe (300, 302) proviennent d'antennes des canaux des cartes d'écho à valeur complexe (300, 302) qui sont disposées à une distance l'une de l'autre de sorte qu'elles visualisent le même espace d'observation et reçoivent les échos de signaux se produisant dans l'espace d'observation avec un temps de propagation de signal différent,
dans lequel l'ensemble de coefficients $(C_1)$ est adapté à un agencement géométrique de l'éolienne et du système radar (200),
dans lequel le fait de combiner (110) les au moins deux cartes d'écho à valeur complexe (300, 302) comprend le fait de multiplier, élément par élément, au moins une carte d'écho (300, 302) par l'ensemble de coefficients à valeur complexe $(C1)$,
et dans lequel la carte d'écho modifiée est réalisée sous la forme d'une carte d'écho de faisceau, créer (120) une carte d'écho parasite (312) pour la carte d'écho modifiée (310),
dans lequel le fait de créer les cartes d'écho parasite comprend le fait d'utiliser un filtre passebas ;
combiner (130) la carte d'écho modifiée (310) et sa carte d'écho parasite (312) correspondante afin d'obtenir une carte d'écho compensée (316) dans laquelle des parties de signal quasistationnaires de la carte d'écho modifiée (310) sont réduites ; et
identifier (140) des objets volants possibles dans la carte d'écho compensée (316).

2. Procédé mis en oeuvre par ordinateur (100) selon la revendication 1, le fait de combiner (110) les au moins deux cartes d'écho à valeur complexe (300, 302) comprenant le fait :
générer un signal de différence sur la base des au moins deux cartes d'écho à valeur complexe (300, 302).

3. Procédé mis en oeuvre par ordinateur (100) selon la revendication 1 ou 2, le fait de combiner (110) les au moins deux cartes d'écho à valeur complexe (300, 302) comprenant le fait :
générer une pluralité de cartes d'écho modifiées associées à l'ensemble de coefficients $(C_1)$.

4. Procédé mis en oeuvre par ordinateur (100) selon l'une des revendications précédentes, le fait de combiner (110) les au moins deux cartes d'écho à valeur complexe (300, 302) comprenant le fait de :
utiliser un conformateur de faisceau.

5. Procédé mis en oeuvre par ordinateur (100) selon l'une des revendications précédentes, comprenant en outre le fait de :
utiliser au moins deux ensembles de coefficients à valeur complexe $(C_1, C_N)$ différents pour générer au moins deux fois une carte d'écho modifiée (310, $310_N$) basée respectivement sur l'un des ensembles de coefficients $(C_1, C_N)$.

6. Procédé mis en oeuvre par ordinateur (100) selon l'une des revendications précédentes, dans lequel l'ensemble de coefficients $(C1)$ comprend des composants à valeur complexe qui sont disposés symétriquement dans le cercle unité.

7. Procédé mis en oeuvre par ordinateur (100) selon l'une des revendications précédentes, comprenant en outre le fait de :
ajuster de manière adaptative l'ensemble de coefficients à valeur complexe (C1) sur la base d'une situation de détection actuelle.

**8.** Procédé mis en oeuvre par ordinateur (100) selon l'une des revendications précédentes, le fait de combiner (130) la carte d'écho modifiée (310) et sa carte d'écho parasite correspondante (312) comprenant le fait de :
diviser (314) les valeurs de la carte d'écho modifiée (310) par les valeurs de sa carte d'écho parasite (312) correspondante.

**9.** Procédé mis en oeuvre par ordinateur (100) selon l'une des revendications précédentes 3 à 8, le fait d'identifier (140) des objets volants possibles comprenant en outre le fait de :
regrouper des éléments déterminés ayant une valeur d'amplitude supérieure à un seuil (330) parmi une pluralité de cartes d'écho compensées (316, $316_N$) générées sur la base de la pluralité de cartes d'écho modifiées (310, $310_N$).

**10.** Procédé mis en oeuvre par ordinateur (100) selon la revendication 9, comprenant le fait de :
déterminer le seuil (330) sur la base d'une situation de détection actuelle.

**11.** Procédé mis en oeuvre par ordinateur (100) selon l'une des revendications précédentes 9 ou 10, comprenant le fait de :
ajuster en continu le seuil (330) à une situation de détection actuelle.

**12.** Procédé mis en oeuvre par ordinateur (100) selon l'une des revendications précédentes, comprenant en outre le fait de :
supprimer des artefacts d'au moins l'une des cartes d'écho compensées.

**13.** Procédé mis en oeuvre par ordinateur (100) selon la revendication 12, comprenant le fait de
utiliser un algorithme de taux de fausses alarmes constantes (320) pour supprimer les artefacts.

**14.** Procédé mis en oeuvre par ordinateur (100) selon l'une des revendications précédentes,
dans lequel les cartes d'écho (300, 302) comprennent des parties de signal distance/Doppler.

**15.** Procédé mis en oeuvre par ordinateur (100) selon l'une des revendications précédentes, comprenant en outre le fait de :
émettre un signal de commande pour commander au moins une caractéristique de l'au moins une éolienne sur la base de la détection d'un objet volant.

**16.** Programme d'ordinateur présentant un code de programme qui, lors de l'exécution du code sur un processeur programmable, amène un procédé mis en oeuvre par ordinateur (100) selon l'une des revendications précédentes à être exécuté.

**17.** Système de détection radar passif (200) pour détecter un objet volant, comprenant au moins deux canaux de réception cohérents (210, 220) ;

une entrée de signal (230) pour recevoir des signaux radar (210', 220') des au moins deux canaux de réception (210, 220) ; et
un dispositif de traitement de signal (240) qui est configuré pour exécuter un procédé mis en oeuvre par ordinateur (100) selon l'une des revendications précédentes.

**18.** Système de détection radar passif (200) selon la revendication 17,
dans lequel des antennes respectives des au moins deux canaux de réception (210, 220) sont disposées à différentes positions par rapport à l'au moins une éolienne, dans lequel une distance prévue entre les différentes positions est basée sur une fréquence de signal utilisée par le système de détection radar.

Kombinieren zumindest zweier komplexwertiger Echokarten mit einem komplexwertigen Koeffizientensatz

*100*

*110*

↓

Erstellen einer Stör-Echokarte *120*

↓

Kombinieren einer modifizierten Echokarte und ihrer korrespondierenden Stör-Echokarte *130*

↓

Identifizieren möglicher Flugobjekte in einer kompensierten Echokarte *140*

Fig. 1

*210*  *210'*  *230*  *200*

*240*

*220*  *220'*

Fig. 2

Fig. 3

400

## Range-Doppler Image

420c

420e

420d

420b

420a

410

Doppler [Hz]

Fig. 4

500

## Range-Doppler Image

520b

530

520a

410

Doppler [Hz]

Fig. 5

**EP 3 709 056 B1**

**IN DER BESCHREIBUNG AUFGEFÜHRTE DOKUMENTE**

**In der Beschreibung aufgeführte Patentdokumente**

- DE 102013004463 B4